# FASCICULE DE BREVET EUROPEEN

(11) **EP 1 944 909 B1**
(45) Date de publication et mention de la délivrance du brevet: **08.07.2009**
(21) Numéro de dépôt: 08000346.0
(22) Date de dépôt: 10.01.2008
(51) Int. Cl.: H04L 12/26

(54) **Procédé de mesure de la sensibilité d'un terminal de réception de services numériques**
Verfahren zur Messung der Empfindlichkeit eines Empfängers von digitalen Diensten
Method for measuring the sensitivity of a digital service receiver terminal

(30) Priorité: 10.01.2007 FR 0700179
(43) Date de publication de la demande: 16.07.2008
(73) Titulaire: SAGEM MOBILES, 75015 Paris (FR)
(72) Inventeur: Danet, Olivier, 95520 Osny (FR)
(74) Mandataire: Maillet, Alain

(56) Documents cités:
- GB-A- 2 386 295
- US-A- 6 137 830
- US-A1- 2003 003 883
- "Front-end and Antennas External Specification" INSTINCT FOR CONVERGENCE, [Online] vol. WP4/D4.1, 5 mars 2004 (2004-03-05), - 5 mars 2004 (2004-03-05) page 1-10,16-22, XP002448824 Extrait de l'Internet: URL:http://dea.brunel.ac.uk/instinct/Docs/ Deliverable4.1_PublicDocs_v1-0.pdf> [extrait le 2007-08-30]

## Description

L'invention concerne le domaine de la mesure de sensibilité en réception radio des terminaux de réception de services numériques.

Les terminaux de réception de services numériques reçoivent des flux numériques contenant des services numériques généralement constitués de vidéo et/ou d'audio plus éventuellement des programmes tels que des applications interactives. Ces terminaux se miniaturisent de plus en plus et ces appareils conçus au départ comme des appareils autonomes et fixes que l'on connecte à un téléviseur sont maintenant souvent intégrés dans des appareils mobiles tels que des appareils de téléphonie mobile ou des assistants personnels. On voit se généraliser ces appareils multi-usages concrétisant le concept de convergence entre le monde de la téléphonie, celui de la diffusion de services numériques ou encore celui de l'informatique.

Ces appareils de réception de services numériques reçoivent ces flux via une interface radio composée d'une antenne et d'un récepteur radio. Il est important de pouvoir quantifier la sensibilité radio d'un tel récepteur. En effet, cette sensibilité joue sur la qualité des services reçus, particulièrement dans des conditions de réception difficiles. Elle est également importante pour l'opérateur du service de diffusion pour établir une couverture de diffusion de ses services sur un territoire donné.

La sensibilité d'un terminal en réception radio est généralement mesurée en rapport au taux d'erreurs bit (BER pour *Bit Error Rate* en anglais) ou en rapport au taux de trames erronées ( PER pour *Packet Errror Ratio* en anglais) dans le flux reçu. Pour une puissance d'émission donnée à une distance donnée, on mesure le taux d'erreurs bit, ou le taux de trames erronées, avec lequel le flux émis est reçu. Plus ce taux est élevé, moins bonne est la transmission. La sensibilité maximum se définit donc comme la puissance d'émission la plus faible permettant une réception avec un taux d'erreurs inférieur à un seuil donné. Une mesure, que l'on qualifiera de directe, de la sensibilité maximum implique donc l'accès au taux d'erreurs bit, ou au taux de trames erronées en réception sur l'appareil. Cette information est généralement disponible dans les couches basses logicielles de l'appareil. Il est donc nécessaire d'implémenter une fonction logicielle permettant de récupérer cette information et de l'accumuler dans le temps pour pouvoir faire des mesures permettant l'évaluation de la sensibilité. Ceci est possible pour des terminaux si cette fonction est disponible ou si l'on maîtrise le logiciel de l'appareil. En revanche, ce procédé ne permet pas de mesurer la sensibilité d'un appareil si l'on n'a pas cette maîtrise de son logiciel système.

Le document US 6 137 830 A décrit un procédé de mesure de la sensibilité de réception radio d'un terminal de réception de services numériques.

Pour pallier cette difficulté, un procédé de mesure indirecte de la sensibilité a été développé. Ce procédé est basé sur le fait que lorsque l'on transmet un flux vidéo à destination d'un tel récepteur, l'augmentation du taux d'erreurs bit dans la transmission se traduit, au-delà d'un certain seuil, par des figements d'images dans la vidéo transmise. Un critère de sensibilité a donc été défini et appelé le point d'échec unique ou SFP (pour *Subjective Failure Point* en anglais). Ce critère correspond à un figement d'images par période de 20 secondes et correspond approximativement à un taux d'erreurs bit de 2.10⁻⁴ ou à un taux d'erreurs trames de 10⁻⁴ après décodage de Reed Solomon.

Un tel procédé de mesure indirecte de la sensibilité est connu du document « Front-end and Antennas Extemal Specification » INSTINCT FOR CONVERGENCE, vol. WP4/D4.1, disposnible en ligne à l'adresse http://dea.brunel.ac.uk/instinct/Docs/Deliverable4.1 PublicDocs V1-0.pdf, qui décrit, globalement et sans grande précision, un procédé de mesure de la sensibilité de réception radio d'un terminal par utilisation d'une fréquence donnée des incidents de restitution du service de test.
La mesure de la sensibilité du terminal se fait, de manière pratique, en introduisant le terminal dans une chambre anéchoïde permettant d'éliminer les perturbations dans la propagation du signal. Cette chambre absorbe les signaux émis
et interdit toute réflexion du signal sur ses parois. De cette façon, le signal reçu par le terminal est composé uniquement du signal direct et non de la superposition du signal direct et de multiples copies de ce signal, légèrement décalés dans le temps et produits par réflexion du signal original sur les parois de la chambre. Un flux de test est alors envoyé vers le terminal dont on veut tester la sensibilité. Là, soit le terminal relève le

taux d'erreurs bit, ou le taux de trames erronées, grâce à un logiciel système approprié, soit un opérateur est présent dans la chambre et détecte les figements d'images dans la vidéo de test transmise, en mesurant la fréquence. La puissance d'émission est ajustable et la sensibilité déduite de la puissance correspondant au taux d'erreurs bit de 2.10⁻⁴ ou à un figement d'images par période de 20 secondes.

Ce procédé nécessite donc la présence de deux opérateurs. Un à l'extérieur de la chambre opère sur la puissance d'émission, tandis qu'un second à l'intérieur s'occupe de la mesure. La présence de l'opérateur à l'intérieur de la chambre est également susceptible de perturber la propagation du signal et donc la mesure obtenue.

L'invention vise à résoudre les problèmes précédents par un procédé de mesure de la sensibilité d'un terminal de réception de services numériques par l'envoi d'un flux de test à destination de l'appareil. Le flux de test est conçu de façon à, lorsque le flux est restitué par le terminal, produire un effet, sonore ou lumineux, aisément détectable par des moyens de mesure. Un figement dans la restitution dudit flux entraîne une perturbation de l'effet mesurable de telle sorte que la fréquence de ces perturbations peut être calculée automatiquement. La sensibilité du terminal est alors déduite de la puissance d'émission nécessaire pour une fréquence de perturbation donnée.

L'utilisation de ce procédé est avantageuse en ce qu'elle n'implique pas de fonctionnalités particulières dédiées au sein du logiciel système du terminal. Il est donc possible d'utiliser ce procédé pour mesurer la sensibilité de tout terminal, que l'on ait accès ou pas à son logiciel système. D'autre part, il permet également une mesure de la sensibilité par un seul opérateur à l'extérieur de la chambre anéchoïde. La mesure ne peut donc pas être perturbée par la présence d'un opérateur à l'intérieur de cette chambre.

L'invention concerne un procédé tel que défini par la revendication 1.

Selon un mode particulier de réalisation de l'invention, le service de test comprend un signal audio continu.

Selon un mode particulier de réalisation de l'invention, le capteur étant un micro, la grandeur physique mesurée est l'amplitude sonore restituée par le terminal.

Selon un mode particulier de réalisation de l'invention, le signal audio est constitué d'une fréquence fixe de 1 kHz.

Selon un mode particulier de réalisation de l'invention, le service de test comprend un signal vidéo périodique.

Selon un mode particulier de réalisation de l'invention, le signal vidéo périodique se compose d'une alternance de séquences claires et de séquences sombres.

Selon un mode particulier de réalisation de l'invention, le capteur est un capteur d'intensité lumineuse.

Selon un mode particulier de réalisation de l'invention, la grandeur physique mesurée est la fréquence de variation de l'intensité lumineuse obtenue par une étape de transformée de Fourier appliquée au signal d'intensité lumineuse fourni par le capteur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente le schéma global d'un exemple de réalisation de l'invention.
La Fig. 2 représente l'amplitude crête sonore, en fonction du temps, mesurée dans un exemple de réalisation de l'invention.
La Fig. 3 représente l'amplitude lumineuse en fonction du temps et l'allure de la transformée de Fourier de cette amplitude.

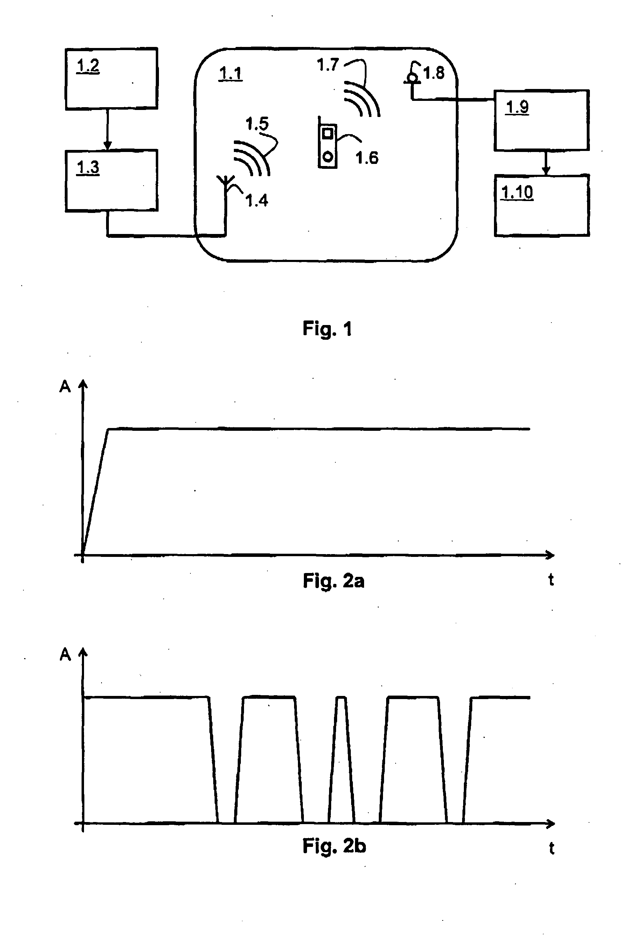

Selon un premier mode de réalisation de l'invention, le procédé de mesure est basé sur un flux de test de type audio. Ce mode de réalisation est illustré par la Fig. 1. Dans un premier temps, le flux de test est préparé et contient un son continu préférentiellement de fréquence fixe. Ce flux est représenté sur le dessin par la boîte référencée 1.2. Par exemple, il est possible d'utiliser un son de fréquence fixe à 1 kHz. Ce son est bien perçu par un opérateur humain sans être trop désagréable à l'oreille. Ce flux est préparé par un outil de génération de flux de test quelconque, tel que ceux utilisés par l'homme du métier habitué à tester des appareils de réception de services numériques. L'exemple de réalisation est basé sur un terminal et des flux conformes à la norme de diffusion DVB (*Digital Video Broadcast* en anglais) normalisée par l'ETSI (*European Telecommunication Standards Institute,* en anglais). Ce flux de test sera alors joué par un serveur de flux, référencé 1.3, qui va émettre le flux de test par l'intermédiaire d'une antenne d'émission, référencée 1.4. Cette antenne est placée à l'intérieur d'une chambre anéchoïde, référencée 1.1. Le terminal à tester est en l'occurrence typiquement un téléphone mobile doté de capacités de réception de services numériques, c'est-à-dire compatible, dans l'exemple de réalisation, avec la norme DVB-.H (*Digital Video Broadcast for Handheld* en anglais). L'homme du métier comprendra que l'invention peut être appliquée de la même façon à tous types de terminaux dotés de la capacité de recevoir par le biais d'ondes radio, des services numériques exploitant la voix et ce quelle que soit la norme de diffusion de ces services. Le flux est donc émis sous la forme d'un signal radio référencé 1.5 à l'intérieur de cette chambre anéchoïde 1.1. Le terminal, référencé 1.6, est placé dans la chambre à une distance donnée de l'émetteur, typiquement trois mètres. Le module de réception du terminal est actif de façon qu'il puisse recevoir le flux de test. Le service, en l'occurrence audio, contenu dans le flux est alors sélectionné pour la restitution. Le terminal décode et restitue donc le service reçu et émet le son de test, référencé 1.7 par l'intermédiaire de ses moyens de restitution sonore, typiquement un haut-parleur intégré dans le terminaL Un micro, référencé 1.8, est disposé dans la chambre anéchoïde de façon à capter les sons émis par le terminal, et donc plus particulièrement le son de test 1.7. Ce micro génère donc un signal audio fourni en entrée à un analyseur audio, référencé 1.9. Cet analyseur audio est programmé de façon à fournir des courbes représentant l'amplitude du signal audio. Ces courbes peuvent être visualisées, par exemple, sur un ordinateur de contrôle, référencé 1.10.

Selon le mode opératoire préféré de la mesure de sensibilité, l'opérateur sélectionne le flux de test et lance sa diffusion au sein de la chambre anéchoïde. La diffusion commencera à une puissance d'émission suffisante pour assurer une bonne réception par le terminal. L'opérateur place alors le terminal dans la chambre anéchoïde et le met en marche. On sélectionne le flux de test sur le terminal et on lance la restitution de ce service. Le terminal commence alors à émettre le son contenu dans le flux de test. L'opérateur sort alors de la chambre anéchoïde, vérifie que le micro perçoit correctement le son émis par le terminal. On doit alors avoir une courbe du type de celui illustré à la Fig. 2a sur l'ordinateur de contrôle 1.10. Cette courbe figure l'amplitude crête sonore en fonction du temps. Après une première montée en puissance lors du démarrage, l'amplitude crête sonore du son émis par le terminal doit se stabiliser à une valeur fixe. L'opérateur baisse alors graduellement la puissance d'émission du flux de test. En dessous d'un certain seuil, des erreurs de transmission commencent à apparaître, mais celles-ci n'ont pas d'effets sur la restitution dans un premier temps. Dans un second temps, lorsque le taux d'erreurs bit, ou le taux d'erreurs trames, dépasse un certain seuil, il se produit des coupures dans la réception du service qui se traduisent par des interruptions du son. On entre alors dans une phase illustrée par la courbe de la Fig. 2b où l'amplitude sonore qui était stable est entrecoupée de périodes de silence. On peut alors définir un critère correspondant à un certain nombre d'interruptions du son sur une période de temps donnée. Expérimentalement, on constate qu'un taux de coupure du son de l'ordre de cinq coupures par unité de temps de 10 secondes correspond approximativement au même taux d'erreurs bit que le critère SFP défini pour la vidéo. La mesure est indépendante du type de haut-parleurs dont est doté le terminal étant donné que la mesure dépend du nombre de coupures et non du niveau du signal sonore perçu. Ce procédé peut donc être utilisé facilement quel que soit le type de terminal dès lors qu'il est doté ou qu'il peut être doté de moyens de restitution sonore. Il ne nécessite aucun branchement d'appareils pouvant perturber le gain d'antenne du terminal, et partant, sa sensibilité. De plus, il est possible de faire varier la position du terminal de manière classique de manière à obtenir un diagramme en trois dimensions de la sensibilité du terminal. De plus, ce procédé permet la mesure de la sensibilité sans nécessiter de canal de communication du terminal vers l'extérieur dédié à la remontée, par exemple, du taux d'erreurs bit, ou du taux d'erreurs trames.

Alternativement, il est possible de coupler le flux élémentaire audio avec un flux vidéo au sein du flux de test. De cette manière, on peut obtenir également le critère SFP pour le terminal et vérifier la cohérence des deux critères. Bien sûr, dans ce cas, la présence d'un opérateur dans la chambre anéchoïde est nécessaire pour mesurer le SFP.

Il est également possible d'envisager la normalisation d'un flux de test qui serait utilisable par tous pour le besoin de la mesure de sensibilité. Mais tout flux audio continu dans la bande de réception du micro peut être utilisé. Il est par contre nécessaire que ce flux audio soit continu pour ne pas risquer de confondre une coupure présente dans le signal utilisé et une coupure due à la baisse de qualité de la transmission du signal portant le flux. Avantageusement, le signal de test est choisi dans la bande audio téléphonique correspondant à la bande de 300 Hz à 3 kHz et correspond à une fréquence fixe.

De manière évidente, ce procédé ne permet pas de mesurer la sensibilité en réception de services numériques d'un terminal dont le haut-parleur de restitution sonore est coupé. Particulièrement, il n'est pas possible de mesurer la sensibilité d'un terminal utilisé conjointement pour une communication téléphonique, mode connu sous le nom de mode dual, dès lors que celle-ci entraîne généralement la coupure de la restitution sonore du service numérique reçu.

Pour pallier ce problème, un second mode de réalisation de l'invention est maintenant décrit. Ce second mode de réalisation, contrairement au premier mode basé sur l'audio, se base sur la vidéo. Tout comme le premier mode, ce second mode permet une mesure directe à l'aide d'un capteur d'une valeur relative à la restitution du service de test dans la chambre anéchoïde. Dans ce second mode, le flux de test contient au moins un service vidéo périodique. Préférentiellement cette vidéo peut être composée d'une succession périodique de séquences blanches et de séquences noires, ou tout au moins de séquences claires et de séquences sombres. La longueur de ces séquences peut varier d'une seule image à quelques dizaines. Lorsqu'une séquence d'images blanches est restituée par le terminal, une luminosité forte est émise par l'écran du terminal. Lorsqu'une séquence d'images noires est émise, aucune luminosité n'est émise. Il s'ensuit qu'en remplaçant le micro 1.8 du premier mode de réalisation par un capteur de luminosité, on obtient une courbe d'intensité lumineuse périodique. Tandis que lorsque la qualité de transmission baisse entraînant des figements d'images, cette périodicité est rompue par des plages allongées, soit de forte luminosité lorsque le figement a lieu pendant une séquence d'images blanches, soit de faible luminosité lorsque le figement a lieu pendant une séquence d'images noires. De même, si la baisse de qualité de la transmission se traduit par l'apparition de blocs dans l'image, ceux-ci auront une influence sur la luminosité émise. Tout en faisant une analyse temporelle, il est donc aussi possible de baser la mesure sur la périodicité du signal issu du capteur d'intensité lumineuse. Dans ce cas, une transformée de Fourier est effectuée sur le signal reçu. En l'absence d'incidents de transmission, le signal étant parfaitement périodique, le résultat de la transformée de Fourier est une succession de pics correspondant à la fréquence fondamentale du signal et à ses harmoniques, les autres valeurs de fréquence étant nulles. Chacun de ces pics correspond donc à une fonction de Dirac. Dès qu'un incident de transmission vient perturber la périodicité de la courbe d'intensité lumineuse, la transformée de Fourier perd sa caractéristique de fonction de Dirac, ce qui est immédiatement perceptible sur l'écran de contrôle utilisé pour la mesure. On obtient ainsi un moyen de mesurer directement le SFP d'un terminal sans nécessiter la présence d'un opérateur dans la chambre pour surveiller l'écran du terminal.

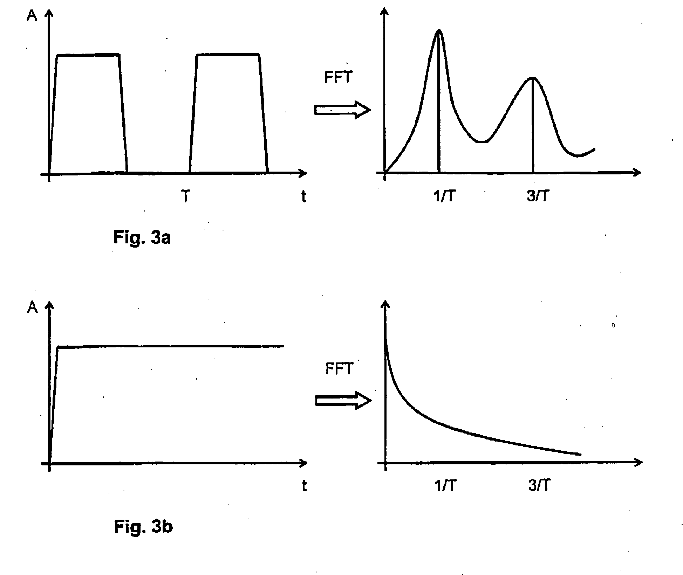

La Fig. 3 illustre les courbes obtenues dans ce mode de réalisation. On voit sur la Fig. 3a, à gauche, l'allure de la courbe résultant de l'intensité lumineuse lorsque la qualité du signal n'entraîne pas d'incidents de transmission. Cette courbe est périodique, de période T. Sa transformée par FFT donne une courbe dont l'allure est donnée à droite. On y discerne clairement le pic de Dirac pour la fréquence correspondant à 1/T, des pics secondaires apparaissent pour les multiples de la fréquence de base 1/T. La Fig. 3b illustre un gel de l'image et donc une intensité lumineuse devenant fixe et l'allure de la courbe transformée correspondante.

Alternativement, il est possible de mesurer une intensité lumineuse moyenne résultant de l'alternance des phases lumineuses et sombres. Cette intensité lumineuse moyenne est modifiée lors d'un incident dû à la baisse de la qualité de transmission. Ce second mode de réalisation de l'invention est compatible avec une utilisation en mode dual du terminal, c'est-à-dire conjointement à une communication de type téléphonique du terminal. Lorsque le terminal n'est pas en mode dual, ces deux modes de réalisation sont utilisables conjointement à l'aide d'un flux de test comprenant conjointement le flux audio du premier mode de réalisation et le flux vidéo du second. Dans ce cas, la chambre anéchoïde est dotée d'un micro et d'un capteur d'intensité lumineuse et l'opérateur visualise conjointement la courbe correspondant à l'amplitude sonore et celle correspondant à l'intensité lumineuse au sein de la chambre anéchoïde.

L'homme du métier comprendra que le procédé de mesure proposé et décrit précédemment au sein d'une chambre anéchoïde peut également être utilisé en milieu libre. Dans ce cas, la mesure ne sera pas protégée d'éventuelles perturbations extérieures et de l'écho du signal servant au test. La fiabilité de la mesure est donc moins grande dans ce cas.

## Revendications

1. Procédé de mesure de la sensibilité de réception radio d'un terminal (1.6) de réception de services numériques comportant les étapes suivantes :
- une étape d'émission par un serveur de flux (1.3) d'un flux de test (1.5) comprenant un service de test ;
- une étape de réception dudit flux de test, de décodage et de restitution par le terminal (1.6) dudit service de test ;
- une étape de détection d'incidents de restitution du service de test par un dispositif de contrôle (1.10);
- une étape d'établissement de la sensibilité du terminal (1.6) en fonction de la puissance d'émission du flux de test (1.5) correspondant à une fréquence donnée des incidents de restitution ;
**caractérisé en ce qu'**il comporte en outre :
- une étape de mesure par un capteur (1.8) à proximité du terminal (1.6) d'une grandeur physique liée à la restitution du service de test et une étape de transmission de cette grandeur physique mesurée au dispositif de contrôle (1.10); et **en ce que**
- l'étape de détection des incidents de restitution du service de test est faite par détection d'une modification de la grandeur physique liée à la restitution du service de test mesurée.

2. Procédé selon la revendication 1 où le service de test comprend un signal audio continu.

3. Procédé selon la revendication 2 où, le capteur étant un micro, la grandeur physique mesurée est l'amplitude sonore restituée par le terminal.

4. Procédé selon la revendication 3 où le signal audio est constitué d'une fréquence fixe de 1 kHz.

5. Procédé selon la revendication 1 où le service de test comprend un signal vidéo périodique.

6. Procédé selon la revendication 5 où le signal vidéo périodique se compose d'une alternance de séquences claires et de séquences sombres.

7. Procédé selon la revendication 6 où le capteur est un capteur d'intensité lumineuse.

8. Procédé selon la revendication 7 où la grandeur physique mesurée est la fréquence de variation de l'intensité lumineuse obtenue par une étape de transformée de Fourier appliquée au signal d'intensité lumineuse fourni par le capteur.

## Claims

1. Method for measuring the radio reception sensitivity of a digital service receiver terminal (1.6) involving the following stages:
- a stage of transmission by a flow server (1.3) of a test flow (1.5) comprising a test service;
- a stage of receipt of the said test flow, decoding and reconstitution of the said test service by the terminal (1.6);
- a stage of detection of test service reconstitution incidents by a monitoring device (1.10);
- a stage of establishment of the sensitivity of the terminal (1.6) as a function of the test flow transmission power (1.5) corresponding to a given frequency of reconstitution incidents;
**characterised in that** it also involves:
- a stage of measurement of a physical quantity associated with the reconstitution of the test service by a sensor (1.8) close to the terminal (1.6) *and a stage of transmission of this measured physical quantity to the monitoring device (1.10).*
and **in that**
- the stage of detection of test service restitution incidents is carried out by detection of a change in the measured physical quantity associated with the reconstitution of the test service.

2. Method according to claim 1 where the test service comprises a continuous audio signal.

3. Method according to claim 2 where, the sensor being a microphone, the measured physical quantity is the acoustic amplitude reconstituted by the terminal.

4. Method according to claim 3 where the audio signal is made up of a fixed frequency of 1 kHz.

5. Method according to claim 1 where the test service comprises a periodic video signal.

6. Method according to claim 5 where the periodic video signal is made up of alternating light sequences and dark sequences.

7. Method according to claim 6 where the sensor is a luminous intensity sensor.

8. Method according to claim 7 where the measured physical quantity is the frequency of variation of the luminous intensity obtained by a stage of Fourier transform applied to the luminous intensity signal supplied by the sensor.

## Patentansprüche

1. Verfahren zum Messen der Funkempfangsempfindlichkeit eines Endgeräts (1.6) zum Empfangen von digitalen Diensten, das die folgenden Schritte umfasst:
- Senden eines Testflusses (1.5), der einen Testdienst umfasst, durch einen Fluss-Server (1.3);
- Empfangen des Testflusses, Decodieren und Wiedergeben des Testdienstes durch das Endgerät (1.6);
- Erkennen von Störungen bei der Wiedergabe des Testdienstes durch eine Steuervorrichtung (1.10);
- Feststellen der Empfindlichkeit des Endgeräts (1.6) in Abhängigkeit von der Sendeleistung des Testflusses (1.5), die einer bestimmten Häufigkeit der Wiedergabestörungen entspricht;
**dadurch gekennzeichnet, dass** es ferner folgende Schritte umfasst:
- Messen einer physikalischer Größe, die mit der Wiedergabe des Testdienstes verbunden ist, durch einen Sensor (1.8) in der Nähe des Endgeräts (1.6), und
- Übertragen dieser physikalischen Messgröße zu der Steuervorrichtung (1.10);
und dass
- das Erkennen der Wiedergabestörungen des Testdienstes durch das Erkennen einer Änderung der physikalischen Größe erfolgt, die mit der Wiedergabe des gemessenen Testdienstes verbunden ist.

2. Verfahren nach Anspruch 1, wobei der Testdienst ein Dauertonsignal umfasst.

3. Verfahren nach Anspruch 2, wobei dann, wenn der Sensor ein Mikrofon ist, die physikalische Messgröße die von dem Endgerät wiedergegebene Schallamplitude ist.

4. Verfahren nach Anspruch 3, wobei das Tonsignal aus einer Festfrequenz von 1 kHz besteht.

5. Verfahren nach Anspruch 1, wobei der Testdienst ein periodisches Videosignal umfasst.

6. Verfahren nach Anspruch 5, wobei das periodische Videosignal aus einem Wechsel von hellen und dunklen Sequenzen besteht.

7. Verfahren nach Anspruch 6, wobei der Sensor ein Lichtintensitäts- bzw. Lichtstärkesensor ist.

8. Verfahren nach Anspruch 7, wobei die physikalische Messgröße die durch einen Schritt einer auf das von dem Sensor gelieferte Lichtintensitäts- bzw. Lichtstärkesignal angewendeten Fouriertransformation erhaltene Variationsfrequenz der Lichtintensität bzw. Lichtstärke ist.
